(19) Europäisches Patentamt
European Patent Office
Office européen des brevets

(11) EP 3 363 558 A1

(12) EUROPEAN PATENT APPLICATION
published in accordance with Art. 153(4) EPC

(43) Date of publication:
22.08.2018 Bulletin 2018/34

(51) Int Cl.:
B22C 5/06 (2006.01)
B03C 1/14 (2006.01)
B03C 1/22 (2006.01)
B22C 5/00 (2006.01)
B03C 1/00 (2006.01)
B03C 1/18 (2006.01)
B07B 4/08 (2006.01)
B22C 5/10 (2006.01)

(21) Application number: 16855159.6

(22) Date of filing: 03.08.2016

(86) International application number:
PCT/JP2016/072823

(87) International publication number:
WO 2017/064905 (20.04.2017 Gazette 2017/16)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 15.10.2015 JP 2015203572

(71) Applicant: Sintokogio, Ltd.
Nagoya-shi, Aichi 450-6424 (JP)

(72) Inventors:
• OBA Takahumi
Toyokawa-shi
Aichi 442-8505 (JP)

• IWASAKI Junichi
Toyokawa-shi
Aichi 442-8505 (JP)
• ABE Kazuya
Toyokawa-shi
Aichi 442-8505 (JP)
• AOKI Tatsuyuki
Toyokawa-shi
Aichi 442-8505 (JP)

(74) Representative: Potter Clarkson LLP
The Belgrave Centre
Talbot Street
Nottingham NG1 5GG (GB)

(54) MOLDING SAND REGENERATION METHOD AND REGENERATING SYSTEM

(57) [Problem] To provide a molding sand reclamation method and reclamation system for effectively separating magnetically attracted matter from molding sand.

[Solution] To provide a molding sand reclamation method comprising removing metal powder and metal pieces by magnetic separation with a first magnetic flux density and removing magnetically attracted matter by magnetic separation with a second magnetic flux density higher than the first magnetic flux density from molding sand S separated from a casting by shot blasting, and removing by dry mechanical reclamation, from the molding sand, substances including carbonized matter adhered to the surface of the molding sand.

[FIG. 1]

**Description**

[Technical Field]

The present invention relates to a molding sand reclamation method and reclamation system.

[Background Art]

Molding sand separated from a casting by shot blasting contains many metal particles and metal pieces. Directly reusing such molding sand is known to have problems, such as causing burning defects in castings due to the effects of metal and reducing mold strength.

Patent Document 1 and Patent Document 2 disclose separating iron in castings with a magnetic separator.

Patent Document 3 discloses a configuration in which magnetic separators are disposed before and after two dry molding sand reclamation apparatuses.

Patent Document 4 discloses a reclamation and separation system for reclaiming and separating chromite sand, which is a metallic molding sand, and silica sand from molding sand after founding has been performed. The present reclamation and separation system is provided with a reclamation machine for reclaiming molding sand, a drum-type magnetic separator for separating and removing a portion of ferromagnetic material contained in the molding sand that was reclaimed by the reclamation machine, and an opposing-pole-type magnetic separator in which a pair of drum-type magnets are disposed so as to form opposing poles. The opposing-pole-type magnetic separator separates the molding sand, from which a portion of ferromagnetic material has been removed, into chromite sand, silica sand and ferromagnetic material.

In molding sand, aside from metal particles and metal pieces, a lot of sand grains are also present in a state in which metals and sand grains are fused together (hereinafter referred to as magnetically attracted matter). If too much magnetically attracted matter is mixed into a mold, this can cause defects such as burning of the cast article, similar to metals, and in chemical binder-based processes, may cause strength degradation of chemical binder-based binding agents. However, magnetically attracted matter has weaker magnetism than metal, so a higher magnetic flux density is needed for separation.

[Patent Document 1] JP 2003-290870 A
[Patent Document 2] JP 2011-245495 A
[Patent Document 3] JP H6-170486 A
[Patent Document 4] JP 2012-51015 A

[Summary of the Invention]

[Problem to be Solved by the Invention]

There are no disclosures in Patent Documents 1-3 pertaining to the separation of magnetically attracted matter.

There are also no disclosures in Patent Document 4 pertaining to the separation of magnetically attracted matter. In addition, Patent Document 4 discloses a configuration of separating chromite sand and silica sand from molding sand. Chromite sand has weaker magnetism than magnetically attracted matter, so magnetic separation needs to be performed at a high magnetic flux density using an opposing-pole-type magnetic separator that is capable of realizing high magnetic flux density. Opposing-pole-type magnetic separators are expensive due to having a complicated structure. In addition, the cost of equipment would increase if the magnetic flux density of magnetic separators increases. That is, magnetically separating magnetically attracted matter using the configuration described in Patent Document 4 would mean using an expensive apparatus with capabilities beyond that required for magnetically separating magnetically attracted matter, which is problematic both in terms of cost and equipment management.

The purpose of the present invention is to provide a molding sand reclamation method and reclamation system for effectively separating magnetically attracted matter from molding sand.

[Means for Solving the Problem]

The molding sand reclamation method according to the present invention comprises removing metal powder and metal pieces by magnetic separation with a first magnetic flux density and removing magnetically attracted matter by magnetic separation with a second magnetic flux density higher than the first magnetic flux density from molding sand separated from a casting by shot blasting, and removing by dry mechanical reclamation, from the molding sand, substances including carbonized matter adhered to the surface of the molding sand.

In addition, the molding sand reclamation system according to the present invention is provided with first magnetic separation equipment for removing metal powder and metal pieces by magnetic separation with a first magnetic flux density from molding sand separated from a casting by shot blasting, second magnetic separation equipment for removing, from the molding sand, magnetically attracted matter by magnetic separation with a second magnetic flux density higher than the first magnetic flux density, and mechanical reclamation equipment for removing by dry mechanical reclamation, from the molding sand, substances including carbonized matter adhered to the surface of the molding sand.

[Effects of the Invention]

According to the present invention, magnetically attracted matter and the like can be effectively removed without complicating equipment or increasing costs.

[Brief Description of the Drawings]

[Fig. 1] A schematic diagram of a molding sand reclamation system shown as an embodiment of the present invention.
[Fig. 2] A schematic cross-sectional figure of the structure of half-magnetic outer-drum type magnetic separation equipment used in the molding sand reclamation system shown as an embodiment of the present invention.
[Fig. 3] An explanatory diagram showing the structure of suspended-type magnetic separation equipment.
[Fig. 4] An explanatory diagram showing the structure of magnetic pulley-type magnetic separation equipment.
[Fig. 5] A schematic cross-sectional figure showing a first example of dry mechanical reclamation equipment used for the molding sand reclamation system shown as an embodiment of the present invention.
[Fig. 6] A view along the arrows A-A in fig. 5.
[Fig. 7] A view along the arrows B-B in fig. 5.
[Fig. 8] A view along the arrows C-C in fig. 7.
[Fig. 9] A schematic cross-sectional figure showing a second example of dry mechanical reclamation equipment used for the molding sand reclamation system shown as an embodiment of the present invention.
[Fig. 10] A graph showing the correlation between the introduced sand flow rate and the target electric current value of a motor in the second example of dry mechanical reclamation equipment.
[Fig. 11] A flow chart in the second example of dry mechanical reclamation equipment.
[Fig. 12] A schematic cross-sectional figure showing a third example of dry mechanical reclamation equipment used for the molding sand reclamation system shown as an embodiment of the present invention.
[Fig. 13] An expanded schematic cross-sectional figure showing a stripping means in the third example of dry mechanical reclamation equipment.
[Fig. 14] A schematic cross-sectional figure showing the structure of classification equipment used for the molding sand reclamation system shown as an embodiment of the present invention.
[Fig. 15] A schematic diagram of a first modified example of the molding sand reclamation system shown as an embodiment of the present invention.
[Fig. 16] A schematic diagram of a second modified example of the molding sand reclamation system shown as an embodiment of the present invention.

[Modes for Carrying Out the Invention]

The best embodiment for carrying out the present invention will be explained herebelow.

First, the molding sand reclamation method will be explained. The molding sand reclamation method comprises removing metal powder and metal pieces by magnetic separation with a first magnetic flux density and removing magnetically attracted matter by magnetic separation with a second magnetic flux density higher than the first magnetic flux density from molding sand separated from a casting by shot blasting, and removing by dry mechanical reclamation, from the molding sand, substances including carbonized matter adhered to the surface of the molding sand.

The substances including carbonized matter, in green sand molds, include porous layers known as oolitics, formed by the sintering of bentonite, and carbonized matter of additives such as coal powder and starch, and in chemical binder-based processes, include carbonized matter and reaction products of binding agents and the like. In this case, chemical binder-based processes refer, for example, to such processes as furan resin acid-curable self-hardening; furan resin $SO_2$ gas-hardening; furan resin thermosetting; phenolic resin thermosetting; phenolic resin superheated steam curing; phenolic resin ester curing self-hardening; phenolic resin acid-curable self-hardening; phenolic resin methyl formate gas-hardening; phenolic resin $CO_2$ gas-hardening; phenolic resin urethanization reaction self-hardening; phenolic resin urethanization reaction amine gas-hardening; oil-modified alkyd resin urethanization reaction self-hardening; polyol resin urethanization reaction self-hardening; water glass ferrosilicon self-hardening; water glass dicalcium silicate self-hardening; water glass ester self-hardening; water glass $CO_2$ gas-hardening; and water glass-heating-and-dehydration-hardening.

In the reclamation method, magnetic separation with a first magnetic flux density refers to magnetic separation with a low magnetic flux density, in other words, magnetic separation performed with the purpose of separating ferromagnetic material with strong magnetism, such as reusable metals. In the reclamation method, the first magnetic flux density is within the range of 0.05-0.1 T. If the magnetic flux density is less than 0.05 T, then the magnetic flux density would be too low, and metal cannot be effectively separated. In addition, if the magnetic flux density is higher than 0.1 T, nonreusable magnetically attracted matter with low metal content would be separated. For this reason, the magnetic flux density employed in magnetic separation with a low magnetic flux density needs to be 0.05-0.1 T.

In addition, magnetic separation with a second magnetic flux density higher than the first magnetic flux density refers to magnetic separation with a high magnetic flux density, in other words, magnetic separation performed with the purpose of separating magnetically attracted matter with weak magnetism, such as nonreusable magnetically attracted matter. In the reclamation method, the second magnetic flux density is within the range of 0.15-0.5 T. If the magnetic flux density is less than 0.15 T, then the magnetic flux density would be too low, and magnetically attracted matter cannot be effectively separated. In addition, if the magnetic flux density is higher than 0.5 T, the separation efficiency of magnetically attracted matter would not proportionally increase even if the magnetic flux density is further increased, and would substantially be the same. For this reason, the magnetic flux density employed in magnetic separation with high magnetic flux density needs to be 0.15-0.5 T.

Repeatedly performing magnetic separation with a high magnetic flux density would increase the quality of reclaimed sand and make it possible to supply reclaimed sand containing a reduced amount of magnetically attracted matter. At this time, the efficiency of magnetically attracted matter removal would be increased by repeatedly performing magnetic separation with the same magnetic flux density. In addition, increasing magnetic flux density in accordance with the number of times of magnetic separation would make it possible to ensure removal, even for magnetically attracted matter having weaker magnetism. Furthermore, by performing magnetic separation with a high magnetic flux density again after separating, by classification, sand grains and carbonized matter, sintered matter, reaction products or the like that have been stripped away, sand grains are polished by reclamation and it becomes possible to ensure removal, even for magnetically attracted matter with an increased ratio of metal.

After removing metal powder and metal pieces, magnetically attracted matter and substances including carbonized matter, sand grains and substances including carbonized matter that have been stripped away are separated by classification.

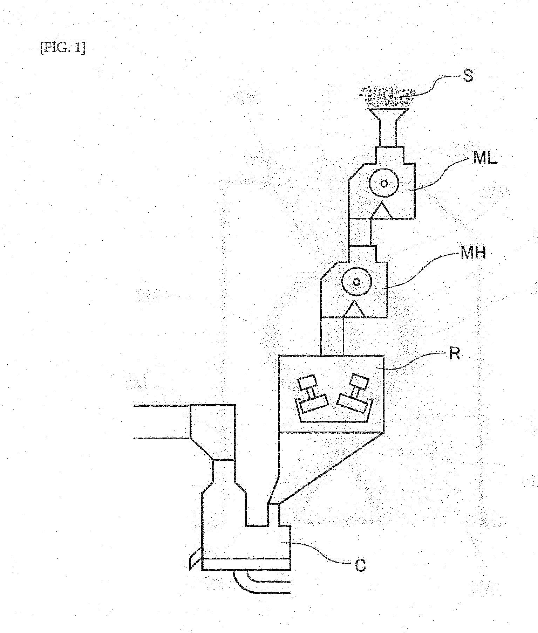

Next, a molding sand reclamation system for carrying out the molding sand reclamation method described above will be explained. Fig. 1 is a schematic diagram of a molding sand reclamation system shown as an embodiment of the present invention.

The molding sand reclamation system shown in fig. 1 comprises first magnetic separation equipment ML, second magnetic separation equipment MH, mechanical reclamation equipment R and classification equipment C.

The first magnetic separation equipment ML removes metal powder and metal pieces by means of magnetic separation with a first magnetic flux density from molding sand S separated from a casting by shot blasting. The second magnetic separation equipment MH removes magnetically attracted matter from the molding sand S by means of magnetic separation with a second magnetic flux density higher than the first magnetic flux density. The mechanical reclamation equipment R removes by dry mechanical reclamation, from the molding sand S, substances including carbonized matter adhered to the surface of the molding sand. The classification equipment C separates sand grains and substances including carbonized matter that have been stripped away.

Next, specific examples of the various types of equipment described above constituting the present molding sand system shall be explained.

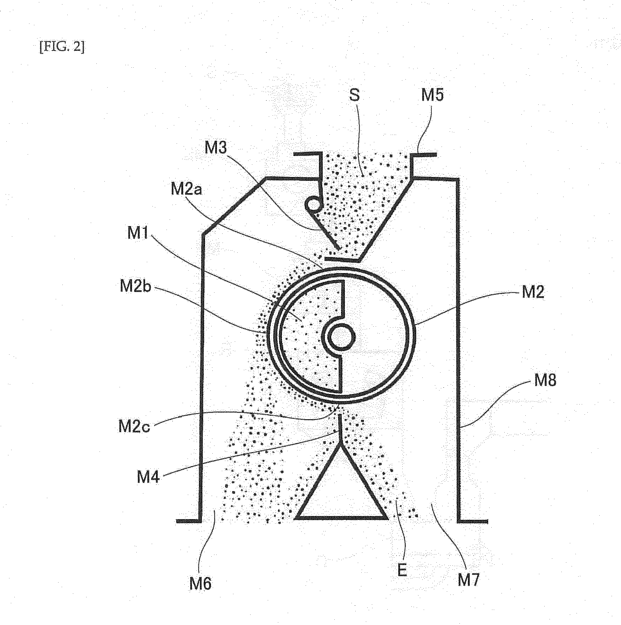

First, the magnetic separation equipment ML with a low magnetic flux density will be explained. Fig. 2 shows an example of magnetic separation equipment ML with a low magnetic flux density. Foreign matter has been removed beforehand from the molding sand S to be loaded into the reclamation system in fig. 1 using foreign-matter removal equipment that is not shown. The magnetic separation equipment ML with a low magnetic flux density magnetically separates the molding sand S by means of the first magnetic flux density within the range of 0.05-0.1 T to remove metals from the molding sand S. The magnetic separation equipment ML with a low magnetic flux density is half-magnetic outer-drum type magnetic separation equipment. The magnetic separation equipment ML with a low magnetic flux density comprises: a permanent magnet M1 fixed to the center of the equipment and arranged so as to impart a magnetic force within the range of conveyance of the molding sand S; a rotating drum M2 closely arranged on the outer circumference of the permanent magnet M1 and having a mechanism that is rotated by a drive source, not shown; an inlet-side dumper M3 arranged directly above the rotating drum M2 and having a mechanism that allows the degree of opening to be freely adjusted; an outlet-side separation plate M4 arranged directly below the rotating drum M2 so as to leave a gap with respect to the rotating drum M2 and having a mechanism that allows the degree of opening to be freely adjusted; a sand loading port M5 arranged directly above the rotating drum M2, adjacent to the inlet-side dumper M3; a sand discharge port M6 opening downward, directly below the rotating drum M2, between the outlet-side separation plate M4 and a housing M8, on the side having the permanent magnet M1; a metal discharge port M7 opening downward, directly below the rotating drum M2, between the outlet-side separation plate M4 and the housing M8, on the side opposite from the sand discharge port M6; and the housing M8.

In fig. 2, when the molding sand S is loaded into the sand loading port M5 while the rotating drum M2 is being rotated in a counterclockwise direction, with the inlet-side dumper M3 adjusted to a state allowing a fixed amount to be cut out, the molding sand S is transported from a position at an upper end M2a of the rotating drum M2 in a state in which a layer is formed on the rotating drum M2. When the rotation of the rotating drum M2 is advanced and the molding sand S passes the midpoint M2b of the rotating drum M2, the molding sand S drops from the rotating drum M2, and is discharged through the sand discharge port M6. The metal E is conveyed to the lower end M2c of the rotating drum M2, and at that point, falls away from the rotating drum M2. At this time, if the outlet-side separation plate M4 is tilted towards the molding sand discharge port M6, then, among the metal E falling from the lower end M2c of the rotating drum M2, the ratio of the metal E discharged from the metal discharge port M7 increases, and conversely, if the outlet-side separation plate M4 is tilted towards the metal discharge port M7, then, among the metal E falling from the lower end M2c of the rotating drum M2, the ratio of the metal E discharged from the sand discharge port M6 increases. Therefore, the position of the outlet-side separation plate M4 must be adjusted to an appropriate position in consideration of the yield ratio of the metal E.

Additionally, the efficiency of magnetic separation is determined, aside from the magnetic flux density, by the thickness of the molding sand S that forms a layer on the rotating drum M2. If this thickness becomes excessive, even if magnetic separation is performed at an appropriate magnetic flux density, the metal E will fall away between the midpoint M2b of the rotating drum M2 and the lower end M2c of the rotating drum M2, thus remaining within the molding sand S. For this reason, the diameter and lateral width of the permanent magnet M1 must be chosen in consideration of the amount of molding sand S that is supplied, so that the thickness of the molding sand S forming a layer on the rotating drum M2 is about 10 mm or less.

Next, the magnetic separation equipment MH with a high magnetic flux density shown in fig. 1 will be explained. The magnetic separation equipment MH with a high magnetic flux density magnetically separates the molding sand magnetically separated by the magnetic separation equipment ML with a low magnetic flux density by means of a second magnetic flux density within the range of 0.15-0.5 T, and removes magnetically attracted matter from the molding sand. The magnetic separation equipment MH with a high magnetic flux density is half-magnetic outer-drum type magnetic separation equipment, and has the same structure as the magnetic separation equipment ML with a low magnetic flux density shown in fig. 2, aside from having a different magnetic flux density.

The efficiency of magnetic separation is also the same as that of the magnetic separation equipment ML with a low magnetic flux density, and the diameter and lateral width of the permanent magnet M1 must be chosen in consideration of the amount of molding sand S that is supplied, so that the thickness of the molding sand S forming a layer on the rotating drum M2 is about 10 mm or less.

In magnetic separation equipment, aside from the half-magnetic outer-drum type having the structure shown in fig. 2, a suspended type in which a magnet is suspended over a belt conveyor, and a magnetic pulley type in which a magnet is built into a head pulley of a belt conveyor, there also exists equipment having a structure employing an opposing-pole-type magnetic separation type in which two pairs of half-magnetic outer drums face each other, but equipment having a structure employing an opposing-pole-type magnetic separation type has a problem in that the cost of equipment is expensive and the structure is complicated compared to other structures. The present invention is capable of separating metal and magnetically attracted matter with inexpensive equipment cost and a simple structure without using magnetic separation equipment employing an opposing-pole-type magnetic separation type.

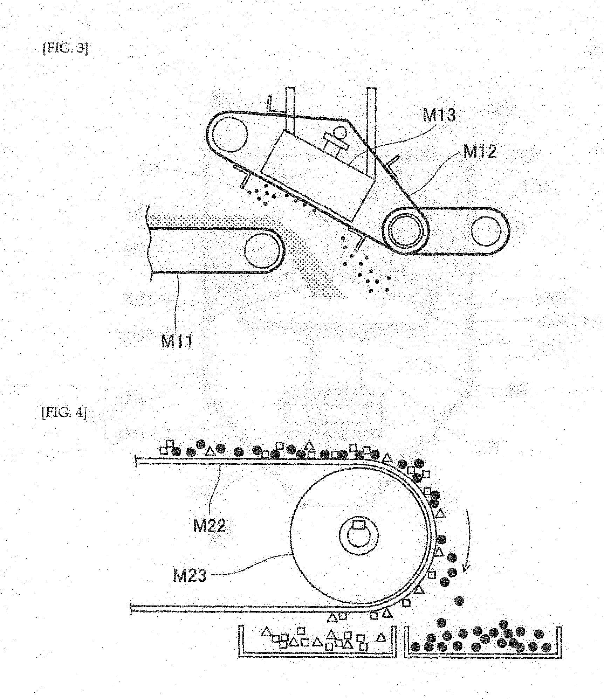

In addition, magnetic separation equipment in the examples of the present invention are not limited to equipment with structures employing the half-magnetic outer-drum type shown in fig. 1 or fig. 2. Equipment can also have structures employing the suspended type shown in fig. 3 in which a second belt conveyor M12 and a magnet M13 are suspended over a first belt conveyor M11, and the magnetic pulley type shown in fig. 4 in which a magnet is built into a head pulley M23 of a belt conveyor M22. However, employing suspended or magnetic pulley types would separately require conveyance equipment such as belt conveyors. By employing a half-magnetic outer-drum type, it becomes possible to separate metal or magnetically attracted matter while making molding sand drop due to gravity as shown in fig. 1 or fig. 2, so there is a merit of being able to make the equipment cost low and the equipment structure simple.

In the present invention, magnetic separation equipment has such a structure in which magnetic separation at a low magnetic flux density is performed as magnetic separation with a first magnetic flux density, and magnetic separation with a high magnetic flux density is performed as magnetic separation with a second magnetic flux density. The reason for such a configuration will be explained below. In other words, if magnetic separation is performed at a high magnetic flux density without performing magnetic separation at a low magnetic flux density, then even after separation of the molding sand, large quantities of metal and magnetically attracted matter would simultaneously be transported by the drum, and not all of the metal and magnetically attracted matter would be transported in a completely magnetically fixed state. In addition, a portion of the metal and magnetically attracted matter would be transported while sliding over the drum. Consequently, the wearing of the rotating drum of magnetic separation equipment would progress significantly quickly, which would result in the need for frequent replacement. Thus, for the purpose of reducing equipment downtime due to frequent replacement and cost for replacing parts, magnetic separation equipment needs to be constructed such that magnetic separation at a low magnetic flux density is performed as magnetic separation with a first magnetic flux density, and then magnetic separation with a high magnetic flux density is performed as magnetic separation with a second magnetic flux density.

Next, the dry mechanical reclamation equipment R shown in fig. 1 will be explained. The dry mechanical reclamation equipment R reclaims the molding sand magnetically separated by the magnetic separation equipment MH with a high magnetic flux density, and removes carbonized matter, sintered matter, reaction products and the like remaining on the surface.

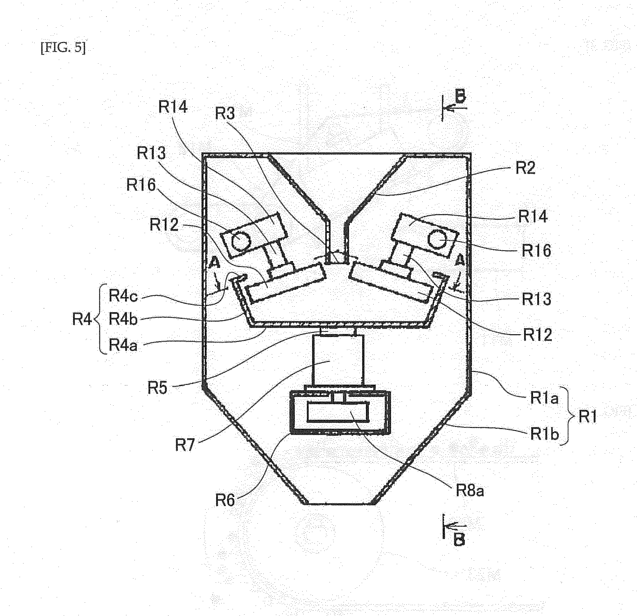

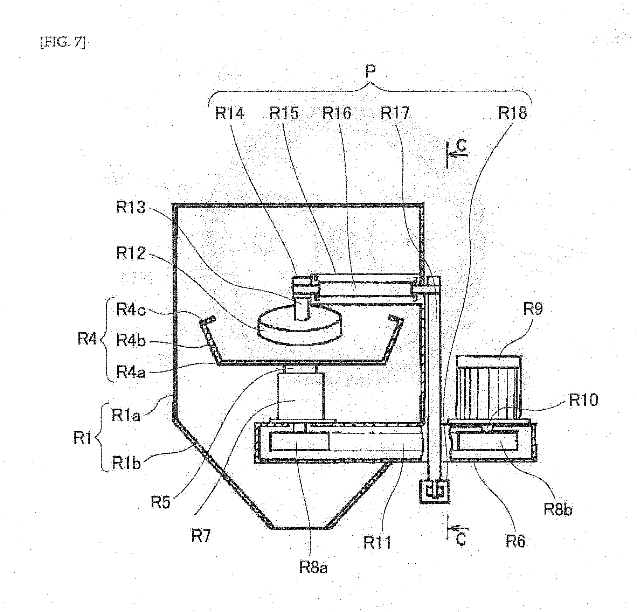

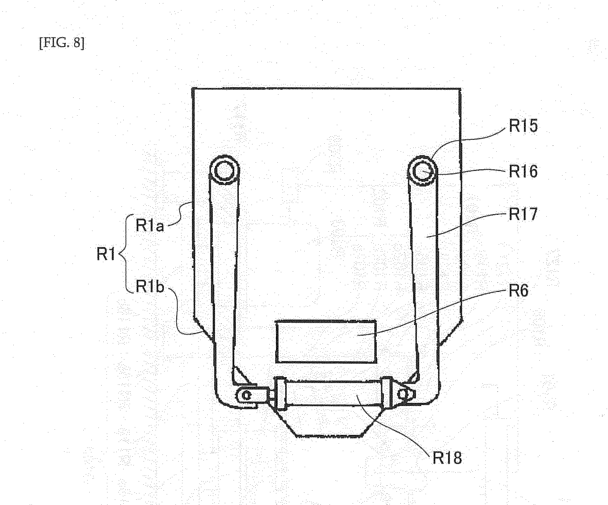

First, a first example of the dry mechanical reclamation equipment R will be explained using fig. 5-8. In the first example, the dry mechanical reclamation equipment R comprises a continuous-type sand supply chute R2 provided with a sand dropping port at a lower end, a rotating drum R4 that is provided so as to be able to rotate horizontally below the sand supply chute R2, and at least one roller R12 that is provided inside the rotating drum R4.

More specifically, a funnel-shaped sand supply chute R2 is suspended over the upper end portion of a processing tank R1 having a pyramidal portion R1b coupled to the lower portion of a square tube portion R1a, and the lower end of the sand supply chute R2 is provided with a sand supply port R3 through which a constant flow of sand continually drops via a gate that is not shown. The rotating drum R4 is provided underneath the sand supply chute R2, and the rotating drum R4 has a configuration in which an inclined circumferential wall R4b, which extends diagonally upward and outward from the circumferential edges of a circular bottom plate R4a, and a weir R4c, which protrudes inward from the upper end of the inclined circumferential wall R4b, are integrally connected.

A rotary shaft R5 is fixed to the central portion of the bottom surface of the circular bottom plate R4a of the rotating drum R4, and the rotary shaft R5 is rotatably supported by a bearing R7 mounted on a hollow support frame R6. A V pulley R8a is mounted on the lower end of the rotary shaft R5, and allows the transmission of motion, via a V belt R11 and a V pulley R8b, from a rotary shaft R10 of a motor R9 that is mounted on a support frame R6 on the outside of the processing tank R1. Inside the rotating drum R4, two rollers R12, R12 are provided with a slight gap with respect to the inclined circumferential wall R4b, and so as to be perpendicular to the inclined circumferential wall R4b. Support shafts R13, R13 are connected to the central portions of the upper surfaces of the rollers R12, R12 so as to be capable of rotation with respect to each other. The upper ends of the support shafts R13, R13 are fixed to ends of support arms R14, R14 extending in a lateral direction (parallel to the rollers R12, R12), and the other ends of the support arms R14, R14 are coupled, via bearings R15, R15, to the ends of horizontal shafts R16, R16 that are supported so as to be capable of vertical rotation and that extend in directions intersecting with the support arms R14, R14. The other ends of the horizontal shafts R16, R16 protrude through the square tube portion R1a to the outside, and are fixed to the upper ends of rotating arms R17, R17. Furthermore, the lower ends of the two rotating arms R17, R17 are coupled by a cylinder R18, forming, as a whole, a roller pressing mechanism P. In other words, a constant pressure is continually applied to the rollers R12, R12 in the direction of the inclined circumferential wall R4b, via the rotating arms R17, the horizontal shafts R16 and the arms R14. Similar functions and effects can be obtained by coupling the lower ends of the rotating arms R17, R17 with a compressed coil spring instead of the cylinder R18.

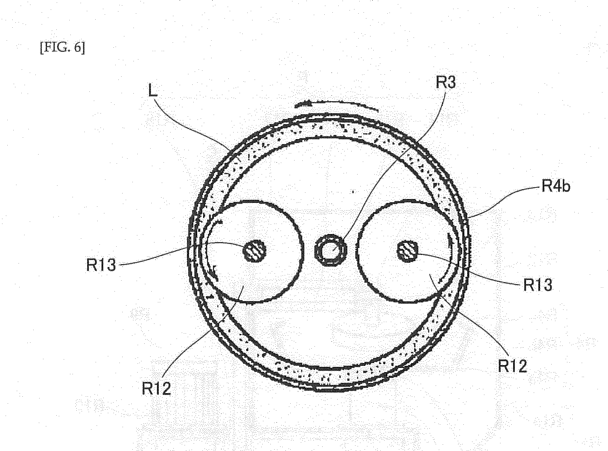

The equipment that is configured in this way is supplied with the molding sand in the sand supply chute R2 while the motor R9 is being driven so that the rotating drum R4 is rotated in the direction of the arrow in fig. 6. As a result, a constant amount of molding sand is continuously supplied from the sand supply port R3 to the central portion of the circular bottom plate R4a of the rotating drum R4. The supplied molding sand is moved in an outward direction by the centrifugal force of the rotating drum R4, and is further accumulated while being pressed by the centrifugal force against the inner surface of the inclined circumferential wall R4b, thereby increasing in thickness and forming a sand layer L. When the thickness of this sand layer L becomes thicker than the gap between the inclined circumferential wall R4b and the rollers R12, R12, the rollers R12, R12 begin rotating due to the frictional force with the molding sand. As time further passes, the sand layer L becomes even thicker and rides over the weir R4c. Thereafter, the thickness is held constant at approximately the same thickness as the width of the weir R4c.

In this state, the sand layer L rotates together with the rotating drum R4, and upon arriving at the positions of the rollers R12, R12, is pinched between the rollers R12, R12 and the inclined circumferential wall of the rotating drum R4, and is subjected to a constant pressing force and a shearing action arises inside the sand, as a result of which adherents on the surfaces of the molding sand are stripped and removed, thereby reclaiming the sand. This sand reclamation is performed by a shearing action while a constant pressure is being applied by the rollers R12, so adherents are efficiently stripped and the sand is not crushed very much. The reclaimed sand rides over the weir R4c, falls to the lower part of the processing tank R1, and is subsequently delivered to the classification equipment C shown in fig. 1.

As described above, the supply of molding sand into the rotating drum R4, the sand reclamation inside the rotating drum R4, and the discharge of the reclaimed sand are performed continuously, so that the molding sand is being continuously reclaimed.

In the above-described configuration, an upward widening inclined surface that extends upward and outward from the circumferential wall R4b of the rotating drum R4 is used because, when the sand layer L is formed by the centrifugal force, the inner diameter of the accumulated layer becomes smaller towards the bottom, due to the effects of gravity. Therefore, such a structure is used to keep the thickness of the sand layer L constant in the up-down direction. As a result, the pressure from the rollers R12, R12 is kept even, and more efficient sand reclamation is achieved. Additionally, while two rollers R12 are provided in the above-described configuration, there may be just one, or there may be three or more. Furthermore, by using a polishing material such as abrasive grains as the material of the outer circumferential portions of the rollers R12, R12, the sand that is pinched between the inclined circumferential wall R4b of the rotating drum R4 and the rollers R12, R12 is polished by the polishing material simultaneously with the sand reclamation, thereby allowing the reclamation efficiency to be further improved. Additionally, the rollers R12, R12 are in a state of applying a constant pressure in the direction of the inclined circumferential wall R4b. Thus, even if there is slight wear or the like, the molding sand can be pressed at a constant pressure, allowing the sand reclamation to be stabilized.

Additionally, in the mechanical reclamation equipment R, the strength of reclamation is represented by the load current of the motor R9, but the load current of the motor R9 is determined by the thickness of the sand layer L and the pressing force of the roller pressing mechanism P. Therefore, the most efficient reclamation can be performed by optimally adjusting the width of the weir R4c and the pressing force of the roller pressing mechanism P.

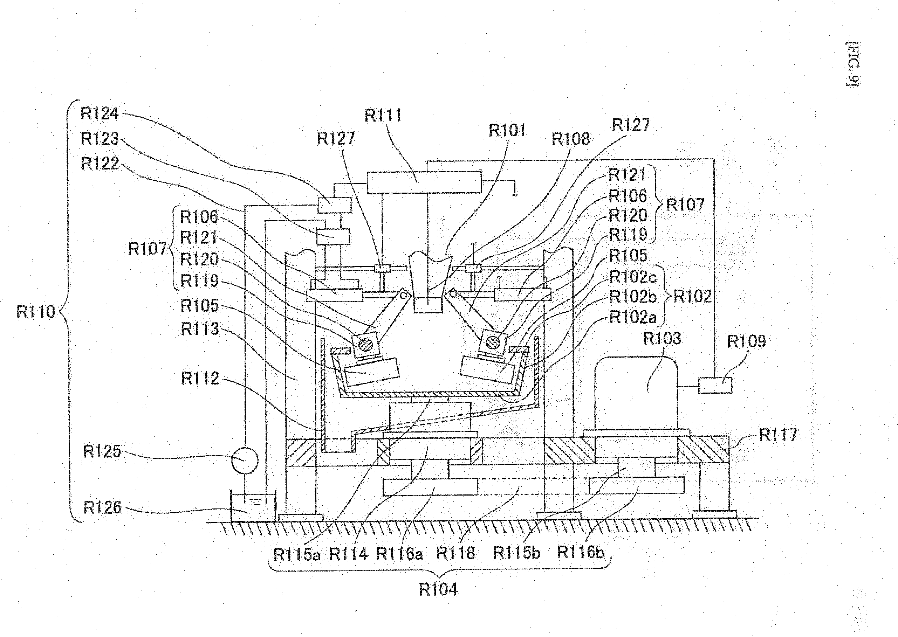

Next, a second example of the dry mechanical reclamation equipment R will be explained using fig. 9-11. In the second example, the dry mechanical reclamation equipment R comprises molding sand reclamation equipment comprising a sand loading portion R101 having a sand dropping port at a lower end, a rotating drum R102 that is provided so as to be able to rotate horizontally below the sand loading portion R101, motor driving means R104 for rotating the rotating drum R102 by means of a motor R103, rollers R105, R105 that are disposed inside the rotating drum R102 with a gap therebetween, and roller pressing mechanisms R107, R107 in which cylinders R106, R106 are coupled to the rollers R105, R105, the mechanisms R107, R107 pressing the rollers R105, R105 towards the rotating drum R102. The dry mechanical reclamation equipment R further comprises a sand flow rate detector R108 that is installed at the sand dropping port of the sand loading portion and that detects the flow rate of the loaded sand, a current detector R109 that detects the electric current value of the motor driving means R104, pressure control means R110 for the cylinders R106, R106, and control means R111. The rotating drum R102 has a configuration in which an inclined circumferential wall R102b extending diagonally upwards and outwards from the circumferential edges of a circular bottom plate R102a is connected to a weir R102c that protrudes inward from the upper end of the inclined circumferential wall R102b. The rollers R105, R105 are arranged so as to leave a slight gap with respect to the inclined circumferential wall R102b. Additionally, a chute R112 is provided so as to surround the rotating drum R102. As a result, reclaimed sand that has been subjected to a shearing action while being pressed at a constant pressure by the rollers R105, R105 rides over the weir R102c, is collected in the chute R112, and is delivered to the classification equipment.

Although the motor driving means R104 is not particularly limited, it is possible to use a mechanism in which a rotating drum R102 is driven by a motor R103 and a belt. In this configuration, a rotary shaft R115a that is supported by a bearing portion R114 mounted to a gate-shaped frame R113 is fixed to the central portion of the lower surface of the circular bottom plate R102a of the rotating drum R102. A pulley R116a is mounted on the lower end of the rotary shaft R115a. Additionally, on the outside of the equipment body, a motor R103 is attached to the frame R117. As a result, the driving power of the motor R103 can be transmitted to the rotating drum R102 by means of a belt R118 that is wrapped around the pulley R116a and a pulley R116b mounted on the rotary shaft R115b of the motor R103.

The roller pressing mechanism R107 is not particularly limited as long as the mechanism is able to use a mechanism that causes a roller R105 to apply pressure by means of a cylinder R106. The present configuration comprises a connector R119 that is fixed to an upper end surface of the roller R105, a shaft R120 that is inserted through and supported by the connector R119, an arm R121 coupled to the shaft R120 and a cylinder R106 coupled to the arm R121. Additionally, a rod of this cylinder R106 is rotatably coupled to the upper end portion of the arm R121. In the present configuration, two rollers R105 are provided, but the number of rollers R105 can be chosen as appropriate.

The sand flow rate detector R108 is not particularly limited as long as the detector is a detector that is installed at the sand dropping port of the sand loading portion R101 and is able to detect the flow rate of the loaded sand. For example, it is possible to use an apparatus that measures the load of sand that is dropped from a certain height by a loading cell or the like. Additionally, the current detector R109 is not particularly limited as long as the detector is a detector that is able to detect the electric current value of the motor driving means R104. For example, it is possible to use a device that converts, to numerical data, the signals of a current transformer that is used for displaying the electric current.

Furthermore, the pressure control means R110 is not particularly limited as long as the means is able to adjust the pressing force due to the cylinders R106. In the present configuration, the means is a mechanism comprising an electromagnetically switched valve 123 connected to a hydraulic pipe R122, a pressure control valve R124, a hydraulic pump 125 and a hydraulic tank R126. This pressure control valve R124 controls the pressure of oil that is fed thereto so as to be proportional to the magnitude of an output signal of the control means R111, and feeds the oil to the cylinders R106. In this configuration, the cylinders R106 are hydraulic cylinders, but the cylinders may be pneumatic cylinders, combination pneumatic/hydraulic cylinders, or electric cylinders. In this case, it is possible to employ a mechanism that can appropriately adjust the pressing force due to the cylinders in accordance with the type of cylinder.

The control means R111 is configured to adjust the pressing force of the rollers R105 due to the cylinders R106 in accordance with the sand flow rate detected by the sand flow rate detector R108. In the present configuration, the means comprises a target current computation unit that calculates the electric current value of the motor R103 corresponding to a sand flow rate detected by the sand flow rate detector R108 so as to maintain a preset correlation between the sand flow rate to be loaded into the rotating drum R102 and the electric current value of the motor R103 corresponding to the sand flow rate, a comparison unit that compares the target electric current value of the motor R103 corresponding to the calculated sand flow rate with the electric current value of the motor R103 actually measured during operation, and a control unit that adjusts the pressing force of the rollers R105 due to the cylinders R106 so that the electric current value of the motor R103 during operation matches the target electric current value, based on the results from the comparison unit. Specifically, the computation involves calculating the negative feedback amount. In other words, the computation involves calculating how much the current pressure setting should be raised or lowered, or whether the setting should be left the same, to approach the target electric current value.

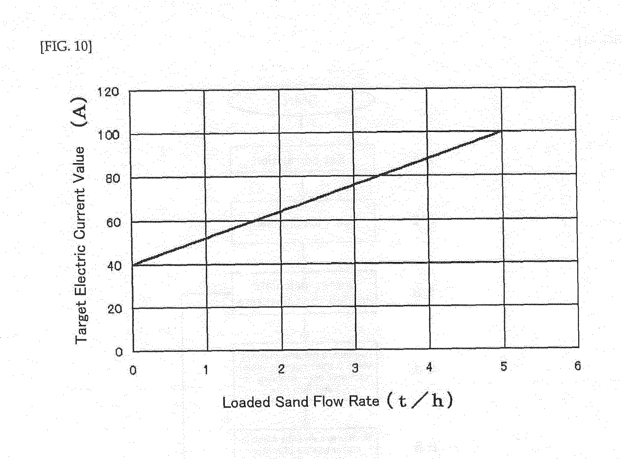

The correlation can be determined as a target electric current value for the electric current value of the motor R103 that is necessary to reclaim the sand at the flow rate being loaded into the rotating drum R102, based on the sand flow rate that is determined by specifications and the electric current value that is determined by the differences in the level of polish required in the reclaimed sand, such as about 80-100 A for sand that is easy to polish and about 100-120 A for sand that is difficult to polish. For example, with consideration of equipment targeting a sand flow rate of about 2-5 t/h, if the electric current value that is necessary in the motor R103 when reclaiming sand at a flow rate of 5 t/h is 100 A, then when the sand flow rate loaded into the rotating drum R102 is 4 t/h, the target electric current value for the motor R103 in accordance with the sand flow rate will be 88 A, as shown in fig. 10. In the present configuration, when the sand flow rate is reduced from 5 t/h to 4 t/h, the pressing force of the rollers R105 due to the cylinders R106 is adjusted so that the electric current value of the motor R103 during operation matches the target electric current value 88 A.

The correlation in the present configuration represents the adjustment of the electric current value in accordance with the loaded sand flow rate as a straight line, but similar control is possible even if the correlation is represented by a curve.

Additionally, the comparison unit preferably comprises a computation unit that compares the target electric current value of the motor R103 corresponding to the loaded sand flow rate with the electric current value of the motor R103 actually measured during operation, then calculates an increase/decrease rate of the pressing force of the rollers R105 due to the cylinders R106. For example, the pressing force due to the cylinders R106 is adjusted by computing the increase/decrease rate (pressure increase rate or pressure decrease rate) obtained from the following equation (1) in 1 second cycles. In this case, the sensitivity is for regulating sudden changes in the increase/decrease rate, and may, for example, be 0.2.

(Equation 1)

$$\text{Increase/decrease rate} = (\text{target electric current value/measured electric current value} - 1) \times \text{sensitivity} + 1 \quad \ldots (1)$$

As a specific computation example for the pressing force, when the target electric current value = 88 A, the measured electric current value = 80 A and the sensitivity = 0.2, the increase/decrease rate = (88/80 -1) x 0.2 + 1 = 1.02. Therefore, if the current pressure setting is 100 kPa, then the pressure setting after 1 second is set to 100 × 1.02 = 102 kPa.

Additionally, in the present configuration, a computation means for calculating the cumulative weight of the processed sand is provided as an additional function of the control means R111. This computation means performs an integration computation, over the processing time, of the sand flow rate measured by the sand flow rate detector R108, to calculate the cumulative weight of the processed sand. For example, a method for performing an integration computation of the measured sand flow rate over the processing time is to set a sampling time to 1 second, set the subtotal of the amount of sand at the processing starting time to zero, and to compute the amount of sand being processed by means of the following equation (2) every 1 second.

(Equation 2)

$$\text{Sand amount subtotal} = \text{sand amount subtotal} + \text{sand flow rate per hour} \times 1/3600 \quad \ldots (2)$$

Next, after integrating the sand amount that is being processed, the cumulative weight of the processed sand (cumulative sand amount) at the time of completion of the process can be computed by using the following equation (3). (Equation 3)

$$\text{Sand amount cumulative total} = \text{sand amount cumulative total} + \text{sand amount subtotal} \quad \ldots (3)$$

The reason for separating the procedure for determining the cumulative total into two stages between a subtotal and a cumulative total is in order to preserve the accuracy of the computation. For example, when processing 2-5 t/h, 0.6-1.4 kg of sand flows per second. Therefore, if operated for 2000 hours in one year, the amount of sand processed will be (0.6 to 1.4) $\times$ 3600 $\times$ 2000 = 4,320,000 to 10,080,000 kg. Since the computation is made down to a floating point with seven significant figures during the computation process, a high-precision computation can be made by direct summation as long as the cumulative total is small. However, if the cumulative total is not reset for a long time, the computation result may exceed seven digits as in the aforementioned case. In this case, a problem occurs in that the smaller significant figures are lost and not added at all. Therefore, the subtotal is determined for each reclamation process, the smaller digits are shifted by about three digits, and then added to the cumulative total so as to provide a high-precision computation.

Additionally, the calculated cumulative weight of the processing sand is displayed on a display device, such as a personal computer, a graphic touch panel or the like, and recorded in a memory card or the like. In the present configuration, this recorded information (data) on the cumulative weight of processed sand can be used to manage the amount of sand during a casting mold making process, or to manage the time of replacement of consumable parts in the equipment, such as the rollers R105 or the rotating drum R102.

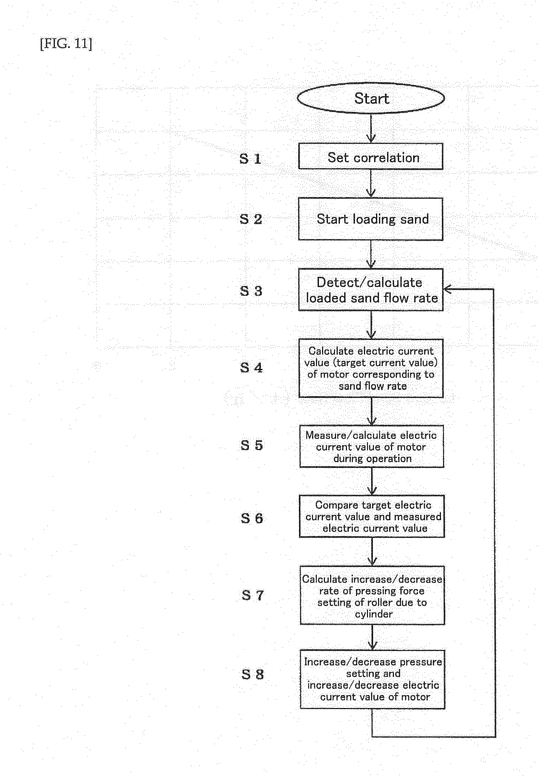

The equipment that is configured in this way is operated in accordance with the flow chart in fig. 11. In the present configuration, the equipment reclaims sand at a flow rate of 5 t/h, and a motor having a target electric current value of 100 A is used. The correlation in this case is shown in fig. 10. Thus, the correlation between the sand flow rate loaded into the rotating drum and the target electric current value of the motor corresponding to the sand flow rate is set and stored (step S1).

Next, the sand reclamation equipment is activated. Then, the loading of sand into the rotating drum is started (step S2).

Next, the current flow rate of the loaded sand is calculated by a sand flow rate detector installed at the sand loading portion (step S3).

Next, the target electric current value of the motor corresponding to the loaded sand flow rate is calculated from the correlation (step S4).

Next, the current (during operation) electric current value (measured electric current value) of the motor is calculated, and compared with the target electric current value of the motor corresponding to the flow rate of the loaded sand (steps S5, S6).

Next, the increase/decrease rate of the roller pressing force due to the cylinders is calculated (step S7).

Next, the increase/decrease rate obtained from equation (1) is calculated at intervals of the sampling time, such as 1 second, the cylinder pressing force setting is increased or decreased, and the electric current value of the motor is increased or decreased. The sensitivity at this time was set to 0.2 (step S8).

With the present configuration, the quality of the reclaimed sand can be improved by controlling the pressing force due to the cylinders in accordance with the target electric current value of the motor corresponding to the loaded sand flow rate.

Additionally, with the present configuration, the main data in the reclamation equipment are recorded during operation, the obtained records are analyzed to monitor changes in the operation state of the equipment or in the properties of the sand, and if the appropriate range is exceeded, then an alert is issued to take countermeasures, thereby preventing the occurrence of major problems and thus allowing the quality of the reclaimed sand to be controlled. Monitoring may involve providing a display on a display screen, and when the appropriate range is exceeded, displaying the reason therefor and a method that can be performed as a countermeasure. Examples of the main data include the loaded sand flow rate, the electric current value of the motor, and the extension and the settings for the pressing force of the cylinders. For example, extreme decreases in the loaded sand flow rate may cause the rollers to suddenly heat up and break, so the sand flow rate is monitored. To manage the variations in the electric current value due to differences in the target electric current value and the electric current value of the motor, the electric current value of the motor is recorded and monitored. If an abnormality is displayed only when the extension of the cylinders exceeds the appropriate range (such as 70-110 mm), then the process leading thereto will be unclear, so the values are recorded. Additionally, if the extension of the cylinders becomes greater even though the properties of the sand or the values of the pressing force of the rollers or the like have not changed, then the rollers or the rotating drum may be worn, so the extension of the cylinders is monitored. The extension of the cylinders can be measured by connecting position sensors, such as linear gauges R127, R127 to the rods of the cylinders R106. Additionally, since there is also a controllable range for the pressing force of the rollers, the pressing force of the rollers is also monitored.

Thus, the present configuration preferably comprises a memory unit that records the main data during operation, a determination unit that determines whether or not the recorded main data are within respectively appropriate ranges, and an alert instruction unit that issues an alert urging that countermeasures be taken when, as a result of the determination, main data are determined to be outside the appropriate range.

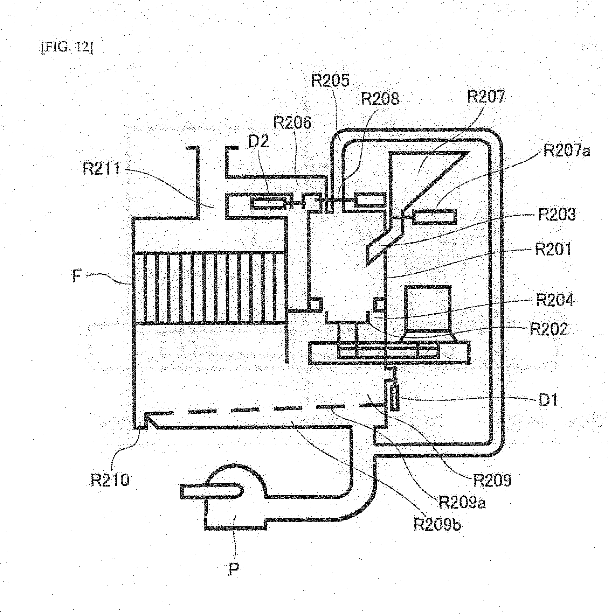

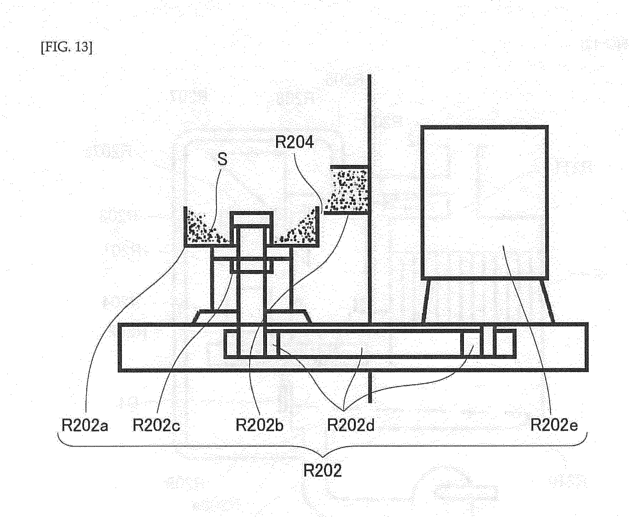

Next, a third example of dry mechanical reclamation equipment R will be explained using fig. 12 and 13. In the third example, the dry mechanical reclamation equipment R is of a batch type and contains classification equipment. A processing tank R201, in which the removal of substances including carbonized matter is performed, has, at the bottom portion thereof, a stripping means R202 for stripping away molding sand. The processing tank R201 has, at the upper portion thereof, a loading port R203 for loading molding sand, and the processing tank R201 has, at the lower portion thereof, a gap R204 for discharging molding sand. The processing tank R201 is connected, at the upper portion thereof, to a blower as an air generation means P via a blow-in pipe R205. Air is blown into the processing tank R201 by means of the blow-in pipe R205. In addition, the processing tank R201 is connected, at the upper portion thereof, to dust collection equipment that is not shown via a suction pipe R206. Air is sucked out of the processing tank R201 by means of the suction pipe R206. In addition, a sand loading chute R207 connected to the sand loading port R203 and comprising a measuring gate R207a is provided on the upper portion of the processing tank R201. Furthermore, a switching valve is provided as a switching means R208 for switching by alternately opening and closing the connection between the processing tank R201 and the blow-in pipe R205, and the connection between the processing tank R201 and the suction pipe R206. In addition, underneath a discharge port R204 of the molding sand, a fluidized tank R209 and the inlet of a dust hood F as a fine powder removal means are connected, and further provided at the lower portion of the fluidized tank R209 are an air compartment R209b partitioned by slit plates R209a and a sand outlet R210. The upper portion of the fluidized tank R209 is connected to dust collection equipment that is not shown via a dust collection duct R211.

Fig. 13 is a sectional view describing the details of the stripping means R202 in the third example of dry mechanical reclamation equipment. In fig. 13, the stripping means R202 is provided with a rotating drum R202a that rotates at high speed by a motor R202e via a bearing R202c and a belt/pulley R202d. The stripping means is configured such that the molding sand S is loaded into the rotating drum R202a, and the molding sand rubs against each other so as to strip away the carbonized matter, sintered matter, reaction products and the like adhered to the surface of the sand grains of the molding sand S. In addition, there is a gap R204 between the rotating drum R202a and a fixed ring R202b, and air can move in and out of the processing tank R201 from the gap R204.

In the third example of dry mechanical reclamation equipment, air can flow in and out of the processing tank R201 by operating the suction pipe R206 and the blow-in pipe R205 in conjunction with each other. For example, in fig. 12, the reclamation process is performed by establishing an open state between the suction pipe R206 and the processing tank R201 and establishing a closed state between the blow-in pipe R205 and the processing tank R201. Furthermore, molding sand that has undergone the reclamation process is dispensed by establishing a closed state between the suction pipe R206 and the processing tank R201 and establishing an open state between the blow-in pipe R205 and the processing tank R201.

More specifically, the flow of air is as follows. First, when performing the reclamation process, a gate-for-performing-reclamation D1 is brought into an open state and a damper D2 is brought into a closed state. Since the gate-for-performing-reclamation D1 is open, air flows from the gate-for-performing-reclamation D1 through the gap R204 and the processing tank R201 to the suction pipe R206, which is in an open state. A blow-out pipe R205 is closed, so the airflow inside the dust hood F becomes the same as the blower airflow. At this time, the damper D2 is closed, so the dust collection airflow becomes the sum of the blower airflow and the gate D1. Next, when sand is discharged, the gate D1 is closed, the blow-in pipe R205 is opened, the blow-out pipe R206 is closed, and the damper D2 is opened. A portion of the blower air flows through the fluidized tank, and a portion of the air flows from the suction pipe R206 to the dust hood F. At this time, the dust collection airflow total decreases, so the shortfall is replenished by the damper D2. In this manner, reclamation and classification are performed.

In the case of the configuration of sand reclamation equipment R in fig. 12 and fig. 13, the equipment contains the classification equipment C shown in fig. 1, as indicated above, so there is an advantage in that there is no need to include classification equipment C separately from sand reclamation equipment R.

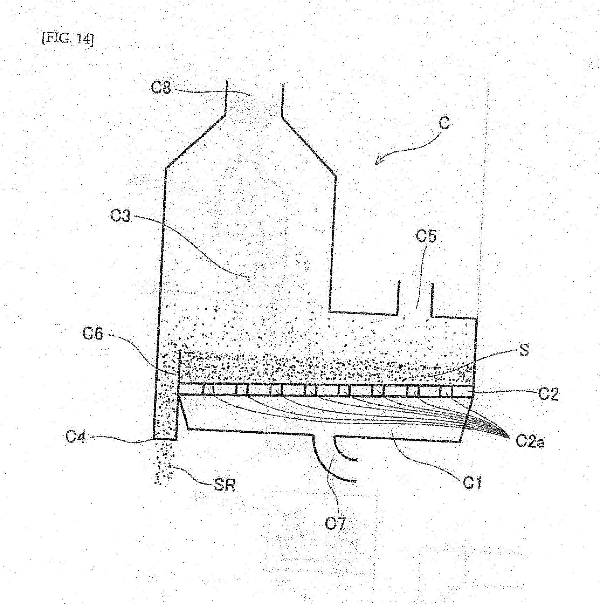

Next, the classification equipment C will be explained using fig. 14. In the third example of dry mechanical reclamation equipment, classification equipment C was disposed in mechanical reclamation equipment, but in this case, a configuration will be explained in which the classification equipment C is provided separately from sand reclamation equipment R. The classification equipment C classifies the molding sand S reclaimed by the dry mechanical reclamation equipment by means of a specific-gravity classification system, and separates the sand into sand grains that are to be recovered and dust such as carbonized matter, sintered matter and reaction products that is to be collected. The classification equipment C comprises an air compartment C1, a bottom plate C2 placed on the upper part of the air compartment C1 and having air ejection ports C2a drilled therethrough, a settlement chamber C3, a sand discharge port C4 provided on a tip of the settlement chamber C3 and opening downwards from the equipment body, a sand loading port C5 provided on the upper portion of the air compartment and opening upwards from the equipment body, a weir C6 provided on the bottom plate C2 at a position adjacent to the sand discharge port C4, an air blowing pipe C7 provided on the bottom portion of the air compartment and connected to an air blower, which is not shown, and a dust collection port C8 provided on the upper end of the settlement chamber C3 and connected to a dust collection device, which is not shown. The bottom plate C2 is slightly tilted, so as to be lower towards the side having the sand discharge port C4 and higher towards the side having the sand loading port C5.

In the classification equipment C, air is blown from the air ejection ports C2a through the air blowing pipe C7 and the air compartment C1 simultaneously with the loading of molding sand S through the sand loading port C5. Then, the molding sand S is fluidized, and begins sliding over the bottom plate C2, with a portion floating within the classification equipment C. Next, the sliding is stopped by the weir C6, forming a layer. In this case, if molding sand S is continuously loaded, the layer of molding sand S will flow over the weir C6, so sand is discharged from the sand discharge port C4.

At this time, by collecting dust from the dust collection port C8, the molding sand S floating inside the classification equipment C floats towards the dust collection port C8, but the reusable molding sand S falls away due to gravity inside the settlement chamber C3, and the carbonized matter, sintered matter, reaction products and the like separated from the molding sand S are lighter in mass than the molding sand S and therefore do not fall due to gravity, and are collected from the dust collection port C8 and separated from the molding sand S. In this manner, reclaimed sand SR is discharged from the sand discharge port C4, and used for forming a main mold or core.

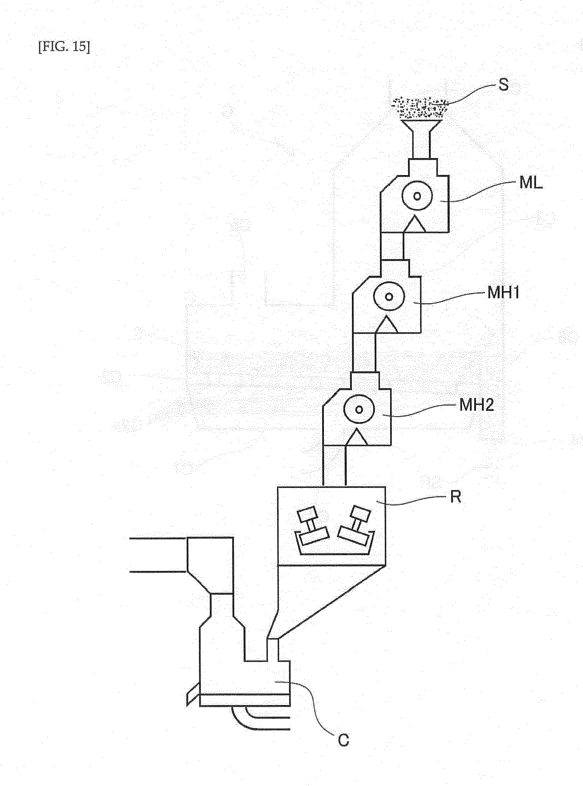

Next, a first modified example of the embodiment described above will be explained using fig. 15. The difference between the first modified example and the embodiment described above is that in the first modified example, magnetic separation equipment with a high magnetic flux density comprises a plurality of units as in MH1 and MH2.

The efficiency of magnetic separation is increased by magnetic separation equipment with a high magnetic flux density MH1, MH2 comprising a plurality of units. At this time, by making the magnetic separation equipment with a high magnetic flux density MH1, MH2 all have the same magnetic flux density, magnetic separation would be repeatedly performed, making it possible for magnetically attracted matter that was not completely separated with magnetic separation for the first time to be separated with magnetic separation for the second time.

In addition, by increasing the magnetic flux density of the magnetic separation equipment with a high magnetic flux density MH1, MH2 in accordance with the number of times, for example by setting magnetic separation equipment MH1 to 0.15 T and magnetic separation equipment MH2 to 0.5 T, it becomes possible for magnetically attracted matter having very weak magnetism that could not be separated by the magnetic separation equipment MH1 to be separated by the magnetic separation equipment MH2.

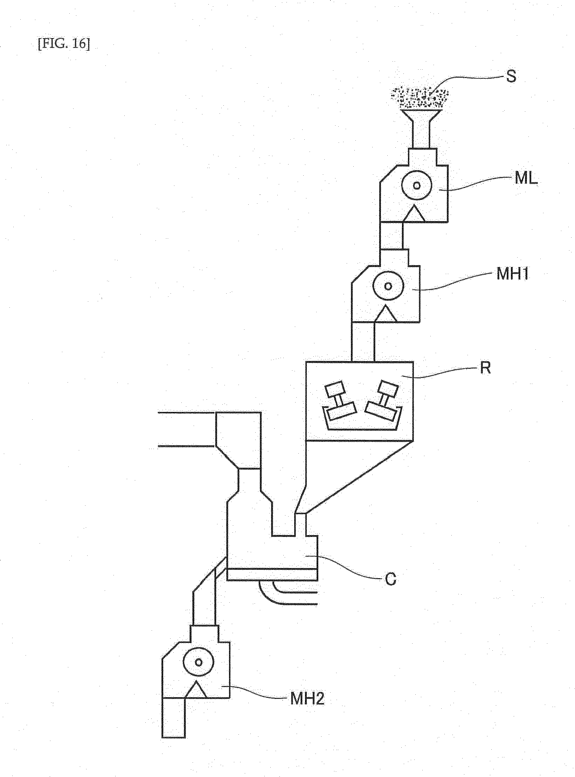

Next, a second modified example of the embodiment described above will be explained using fig. 16. The difference between the second modified example and the embodiment described above is that in the second modified example, magnetic separation equipment with a high magnetic flux density comprises a plurality of units as in MH1 and MH2, in which MH2 is arranged following the classification equipment C.

Due to such a configuration, magnetically attracted matter that could not be completely separated by the first unit, magnetic separation equipment MH1, is polished by reclamation equipment R and then separated by the second unit, magnetic separation equipment MH2, because of stronger magnetism resulting from an increased proportion of metals increases due to the removal of metal oxides and molding sand.

The molding sand reclamation method and reclamation system of the present invention are not to be construed as being limited to the embodiments and modified examples disclosed above that were explained with reference to drawings, and various other modified examples may be contemplated within the technical scope thereof.

For example, in the embodiment and modified examples described above, reclamation equipment R comprises a single unit, but the number of units of the reclamation equipment R is not limited to a single unit, and may be a configuration comprising a plurality of units in accordance with the required reclamation capacity.

In addition, in the modified examples, magnetic separation equipment with a high density comprising a plurality of units is not limited to two units as in MH1 and MH2, and may be a configuration of three or more units.

In addition, in the second modified example, magnetic separation equipment with a high density arranged following the classification device C is not limited to a single unit as in MH2, and may be a configuration of two or more units.

In addition to the above, it is possible to mix and match the configurations indicated in the embodiments described above and to appropriately modify the configurations to other configurations, without departing from the spirit of the present invention.

[Description of Reference Symbols]

S  Molding sand
ML Magnetic separation equipment with a low magnetic flux density
MH Magnetic separation equipment with a high magnetic flux density
R  Reclamation equipment
C  Classification equipment

**Claims**

1. A molding sand reclamation method comprising:

   removing metal powder and metal pieces by magnetic separation with a first magnetic flux density and removing magnetically attracted matter by magnetic separation with a second magnetic flux density higher than the first magnetic flux density from molding sand separated from a casting by shot blasting; and
   removing by dry mechanical reclamation, from the molding sand, substances including carbonized matter adhered to the surface of the molding sand.

2. The molding sand reclamation method according to claim 1, wherein the first magnetic flux density is within the range of 0.05-0.1 T.

3. The molding sand reclamation method according to claim 1 or 2, wherein the second magnetic flux density is within the range of 0.15-0.5 T.

4. The molding sand reclamation method according to any one of claims 1-3, comprising separating, by classification, sand grains and the substances including carbonized matter that have been stripped away after removing the metal powder and metal pieces, the magnetically attracted matter and the substances including carbonized matter.

5. The molding sand reclamation method according to any one of claims 1-4, wherein the magnetic separation with the second magnetic flux density is performed multiple times.

6. The molding sand reclamation method according to claim 4, comprising removing magnetically attracted matter by the magnetic separation with the second magnetic flux density again after the separation by classification.

7. The molding sand reclamation method according to claim 5 or 6, wherein the magnetic separation performed multiple times with the second magnetic flux density is performed with the same magnetic flux density.

8. The molding sand reclamation method according to claim 5 or 6, wherein the magnetic flux density when performing the magnetic separation with the second magnetic flux density multiple times increases in accordance with the number of times the magnetic separation is performed.

9. The molding sand reclamation method according to any one of claims 1-8, wherein the magnetic separation is any one of a half-magnetic outer-drum type, a suspended type, and a magnetic pulley type.

10. A molding sand reclamation system comprising:

    first magnetic separation equipment for removing metal powder and metal pieces by magnetic separation with a first magnetic flux density from molding sand separated from a casting by shot blasting;
    second magnetic separation equipment for removing, from the molding sand, magnetically attracted matter by magnetic separation with a second magnetic flux density higher than the first magnetic flux density; and
    mechanical reclamation equipment for removing by dry mechanical reclamation, from the molding sand, substances including carbonized matter adhered to the surface of the molding sand.

11. The molding sand reclamation system according to claim 10, wherein the first magnetic flux density is within the range of 0.05-0.1 T.

**12.** The molding sand reclamation system according to claim 10 or 11, wherein the second magnetic flux density is within the range of 0.15-0.5 T.

**13.** The molding sand reclamation system according to any one of claims 10-12, comprising classification equipment for separating, by classification, sand grains and the substances including carbonized matter that have been stripped away.

**14.** The molding sand reclamation system according to any one of claims 10-13, comprising a plurality of units of the second magnetic separation equipment.

**15.** The molding sand reclamation system according to any one of claims 10-14, wherein the first and second magnetic separation equipment have a structure employing any one of a half-magnetic outer-drum type, suspended type and magnetic pulley type.

**16.** The molding sand reclamation system according to any one of claims 10-15, wherein the mechanical reclamation equipment comprises:

a continuous-type sand supply chute provided with a sand dropping port at a lower end;
a rotating drum that is arranged so as to be able to rotate horizontally underneath the sand supply chute, and that has, connected thereto, an inclined circumferential wall extending obliquely upwards and outwards from circumferential edges of a circular bottom plate, and a weir protruding inward from the upper end of the inclined circumferential wall; and
at least one roller that is arranged, inside the rotating drum, perpendicularly with respect to the inclined circumferential wall, with a slight gap provided therebetween.

**17.** The molding sand reclamation system according to claim 16, wherein the mechanical reclamation system further comprises:

a roller pressing mechanism that is coupled to the roller and that presses the roller, with a constant pressure, towards the inclined circumferential wall;
a motor driving means for rotating the rotating drum by using a motor;
a sand flow rate detector that is installed at the sand dropping port of a sand loading portion and that detects the flow rate of loaded sand;
an electric current detector that detects an electric current value of the motor driving means;
a pressure control means for a cylinder that is the roller pressing mechanism; and
a control means for adjusting a pressing force of the roller due to the cylinder in accordance with the sand flow rate detected by the sand flow rate detector; and
the control means comprises:

a target electric current computation unit that is preset with a correlation between the sand flow rate and an electric current value for the motor determined by differences in a level of polishing required for reclaimed sand, and that calculates a target electric current value of the motor corresponding to the sand flow rate detected by the sand flow rate detector so as to maintain the correlation;
a comparison unit that compares the target electric current value of the motor, corresponding to the flow rate of the loaded sand, with an electric current value of the motor as actually measured during operation; and
a control unit that adjusts the pressing force of the roller due to the cylinder, based on results from the comparison unit, so that the electric current value of the motor during operation is the target electric current value of the motor.

**18.** The molding sand reclamation system according to any one of claims 10-15, wherein the mechanical reclamation equipment is a batch type and comprises:

a suction pipe through which air is sucked out from a processing tank in which the substances including carbonized matter are removed;
a blow-in pipe through which air is blown into the processing tank; and
a switching means for alternately opening and closing the suction pipe and the blow-in pipe, and
air can flow in and out of the processing tank by operating the suction pipe and the blow-in pipe in conjunction with each other.

19. The molding sand reclamation system according to any one of claims 10-18, comprising a plurality of units of the mechanical reclamation equipment.

20. The molding sand reclamation system according to claim 13, wherein the classification equipment is a specific-gravity classification system.

[FIG. 1]

[FIG. 2]

[FIG. 3]

M13

M12

M11

[FIG. 4]

M22

M23

[FIG. 5]

[FIG. 6]

[FIG. 7]

[FIG. 8]

[FIG. 9]

[FIG. 10]

[FIG. 11]

```
                           ╭─────────────╮
                           │    Start     │
                           ╰──────┬──────╯
                                  │
                                  ▼
     S 1             ┌────────────────────────┐
                     │     Set correlation     │
                     └────────────┬───────────┘
                                  │
                                  ▼
     S 2             ┌────────────────────────┐
                     │    Start loading sand    │
                     └────────────┬───────────┘
                                  │
                                  ▼
     S 3             ┌────────────────────────┐
                     │      Detect/calculate    │◄─────┐
                     │   loaded sand flow rate  │      │
                     └────────────┬───────────┘       │
                                  │                    │
                                  ▼                    │
                     ┌────────────────────────┐        │
     S 4             │  Calculate electric current │    │
                     │  value (target current value)│   │
                     │  of motor corresponding to │    │
                     │       sand flow rate       │    │
                     └────────────┬───────────┘        │
                                  │                     │
                                  ▼                     │
                     ┌────────────────────────┐         │
     S 5             │  Measure/calculate electric │     │
                     │   current value of motor   │     │
                     │      during operation      │     │
                     └────────────┬───────────┘         │
                                  │                      │
                                  ▼                      │
                     ┌────────────────────────┐          │
     S 6             │   Compare target electric │        │
                     │  current value and measured│       │
                     │    electric current value   │       │
                     └────────────┬───────────┘          │
                                  │                       │
                                  ▼                       │
                     ┌────────────────────────┐           │
     S 7             │ Calculate increase/decrease│         │
                     │    rate of pressing force   │         │
                     │    setting of roller due to  │         │
                     │          cylinder          │         │
                     └────────────┬───────────┘            │
                                  │                         │
                                  ▼                         │
                     ┌────────────────────────┐             │
     S 8             │ Increase/decrease pressure │           │
                     │        setting and        │───────────┘
                     │ increase/decrease electric │
                     │    current value of motor   │
                     └────────────────────────┘
```

[FIG. 12]

[FIG. 13]

[FIG. 14]

[FIG. 15]

[FIG. 16]

## INTERNATIONAL SEARCH REPORT

| International application No. |
| --- |
| PCT/JP2016/072823 |

### A. CLASSIFICATION OF SUBJECT MATTER

*B22C5/06*(2006.01)i, *B03C1/00*(2006.01)i, *B03C1/14*(2006.01)i, *B03C1/18* (2006.01)i, *B03C1/22*(2006.01)i, *B07B4/08*(2006.01)i, *B22C5/00*(2006.01)i, *B22C5/10*(2006.01)i

According to International Patent Classification (IPC) or to both national classification and IPC

### B. FIELDS SEARCHED

Minimum documentation searched (classification system followed by classification symbols)
B22C5/06, B03C1/00, B03C1/14, B03C1/18, B03C1/22, B07B4/08, B22C5/00, B22C5/10

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 52-101631 A (Shizuo HORIE), 25 August 1977 (25.08.1977), Detailed Explanation of the Invention (Family: none) | 1-20 |
| Y | JP 2011-245495 A (Comutars Kabushiki Kaisha), 08 December 2011 (08.12.2011), paragraphs [0014] to [0027]; fig. 1 (Family: none) | 1-20 |
| Y | JP 54-20919 A (Toyo Coated Sand Kabushiki Kaisha), 16 February 1979 (16.02.1979), Detailed Explanation of the Invention; fig. 1, 2 (Family: none) | 1-20 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 October 2016 (18.10.16) | 01 November 2016 (01.11.16) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/072823

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2014-24097 A  (Asahi Tec Corp.),<br>06 February 2014 (06.02.2014),<br>paragraphs [0020] to [0055]; fig. 1 to 3<br>& CN 103567376 A | 4-9,13-20 |
| Y | JP 5-104192 A  (Fukutaro KATAOKA),<br>27 April 1993 (27.04.1993),<br>paragraphs [0006] to [0033]; fig. 1<br>(Family: none) | 4-9,13-20 |
| Y | JP 11-320024 A  (Washo Kogyo Kabushiki Kaisha),<br>24 November 1999 (24.11.1999),<br>paragraph [0012]<br>(Family: none) | 9,15-19 |
| Y | JP 2009-154207 A  (Sinto Kogyo Ltd.),<br>16 July 2009 (16.07.2009),<br>paragraphs [0010] to [0021]; fig. 1 to 3<br>& US 2010/0276528 A1<br>paragraphs [0017] to [0056]; fig. 1 to 3<br>& WO 2009/072459 A1      & EP 2221129 A1<br>& KR 10-2010-0090691 A   & CN 101868310 A | 16,17,19 |
| Y | JP 2000-225438 A  (Sinto Kogyo Ltd.),<br>15 August 2000 (15.08.2000),<br>paragraphs [0005] to [0037]; fig. 1 to 5<br>& EP 1025926 A2<br>paragraphs [0008] to [0053]; fig. 1 to 5<br>& KR 10-2000-0057955 A   & CN 1264630 A | 18,19 |
| A | JP 6-170485 A  (Asahi Tec Corp.),<br>21 June 1994 (21.06.1994),<br>paragraphs [0008] to [0020]; fig. 1, 2<br>(Family: none) | 1-20 |
| A | JP 58-128246 A  (Japan Casting Co., Ltd.),<br>30 July 1983 (30.07.1983),<br>Detailed Explanation of the Invention; fig. 1,<br>2<br>(Family: none) | 1-20 |
| A | JP 58-128248 A  (Japan Casting Co., Ltd.),<br>30 July 1983 (30.07.1983),<br>Detailed Explanation of the Invention<br>(Family: none) | 1-20 |
| A | JP 53-83927 A  (Shizuo HORIE),<br>24 July 1978 (24.07.1978),<br>Detailed Explanation of the Invention<br>(Family: none) | 1-20 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003290870 A
- JP 2011245495 A
- JP H6170486 A
- JP 2012051015 A